# EUROPÄISCHE PATENTSCHRIFT

(11) **EP 2 083 390 B1**
(45) Veröffentlichungstag und Bekanntmachung des Hinweises auf die Patenterteilung: **01.06.2016**
(21) Anmeldenummer: 08150623.0
(22) Anmeldetag: 24.01.2008
(51) Int. Cl.: G06T 7/00

(54) **Verfahren zur Segmentierung eines 3D-Bilddatensatzes, zugehöriges Computerprogrammprodukt und zugehöriges System**
Method for segmenting a 3D image data set, accompanying computer program product and accompanying system
Procédé destiné à la segmentation d'un ensemble de données d'image en 3D, produit de programme informatique correspondant et système correspondant

(43) Veröffentlichungstag der Anmeldung: 29.07.2009
(73) Patentinhaber: Brainlab AG, 85622 Feldkirchen (DE)
(72) Erfinder: Weiser, Manfred, 81825 München (DE); Feilkas, Thomas, 85567 Grafing (DE)
(74) Vertreter: Schwabe - Sandmair - Marx

(56) Entgegenhaltungen:
- EP-A- 1 868 157
- DE BRUIJNE M ET AL: "Active shape models exploiting slice-to-slice correlation in segmentation of 3D CTA AAA images" 2001, Seiten 1-8, XP002487622 Gefunden im Internet: URL:http://www.cs.uu.nl/research/techreps/ repo/CS-2001/2001-61.pdf>
- JYRKI LOTJONEN ET AL: "Reconstruction of 3-D Geometry Using 2-D Profiles and a Geometric Prior Model" IEEE TRANSACTIONS ON MEDICAL IMAGING, IEEE SERVICE CENTER, PISCATAWAY, NJ, US, Bd. 18, Nr. 10, 1. Oktober 1999 (1999-10-01), XP011035907 ISSN: 0278-0062
- XIAO DONG ET AL: "Automatic Extraction of Femur Contours from Calibrated Fluoroscopic Images" APPLICATIONS OF COMPUTER VISION, 2007. WACV '07. IEEE WORKSHOP ON, IEEE, PI, 1. Februar 2007 (2007-02-01), Seiten 55-55, XP031055164 ISBN: 978-0-7695-2794-9

## Beschreibung

### Gebiet der Erfindung

Die vorliegende Erfindung bezieht sich auf die Verarbeitung von Bilddaten im Bereich der Medizintechnik. Konkret bezieht sich die vorliegende Erfindung auf ein Verfahren zur Segmentierung eines 3D-Bilddatensatzes, auf ein zugehöriges Computerprogrammprodukt mit einem Programmcode zum Ausführen des erfindungsgemäßen Segmentierungsverfahrens und auf ein System zum Segmentieren eines 3D-Bilddatensatzes.

### Stand der Technik

Die Erfindung kann bei navigationsunterstützten Operationen verwendet und zur Planung von operativen Eingriffen herangezogen werden. Kurz umrissen wird bei navigationsunterstützten Operationen die gegenwärtige Position eines Patienten oder eines Teils des Körpers eines Patienten einerseits sowie die Position von medizinischen Behandlungsgeräte wie z.B. einem Skalpell andererseits durch eine Detektionseinheit detektiert, und die detektierten Positionsdaten werden Körperstrukturdaten zugeordnet, welche z.B. ein Modell einer Knochenoberfläche sein können, um die Körperstrukturdaten gemeinsam mit den Positionsdaten während einer navigationsunterstützten Operation bzw. bei der Planung von operativen Eingriffen zu verwenden. Ein solches Navigationssystem ist z.B. in DE 196 39 615 C2 beschrieben.

Im Folgenden soll unter der Segmentierung eines Bilddatensatzes verstanden werden, dass mindestens ein Bereich des Bilddatensatzes mindestens einer Körperstruktur zugeordnet wird. Z.B. können Bildbereiche bestimmt werden, die einzelne Wirbel einer kompletten Wirbelsäule abbilden. Die Segmentierung erleichtert insofern die Interpretation und das Verständnis von vorliegenden Bilddaten.

Es ist im Stand der Technik bekannt, 2D-Bilddatensätze sowie auch 3D-Bilddatensätze (Volumendatensätze) zu segmentieren. Solche Bilddatensätze können mit in der Medizin gängigen Abbildungsverfahren erzeugt werden. Ein 2D-Bilddatensatz wird beispielsweise bei einer herkömmlichen Röntgenaufnahme oder einer Ultraschallaufnahme erzeugt. 3D-Bilddatensätze werden beispielsweise bei einem Computertomographen oder bei einer Aufnahme mittels eines Kernspintomographen erzeugt. Sollen diese Bilddatensätze segmentiert werden, so hat sich die Segmentierung von 3D-Bilddatensätzen als besonders kompliziert verglichen mit der Segmentierung von 2D-Bilddatensätzen erwiesen. Die Verfahren zur Segmentierung von 2D-Bilddatensätzen sind insbesondere im außermedizinischen Sektor, z.B. bei Verfahren zur Gesichtserkennung, verhältnismäßig gut entwickelt.

Im Bereich der 2D-Bilddatensatzsegmentierung werden so genannte Snake-Verfahren oder auch Balloon-Verfahren verwendet. Dabei handelt es sich um modellbasierte Verfahren, bei denen um den zuzuordnenden Bereich (die Körperstruktur) herum bzw. innerhalb jenes Bereiches geschlossene Pfade definiert werden. Diese werden bevorzugt durch iterative Verfahren der tatsächlichen 2D-Struktur des zu identifizierenden Bereiches angenähert, und zwar bei der Verwendung von Snakes von außen nach innen und bei der Verwendung von Balloons von innen nach außen.

Es wurde versucht, die oben umrissenen bekannten Segmentierungsverfahren für 2D-Bilddatensätze auch bei 3D-Bilddatensätzen zu verwenden. Dabei wurden die 3D-Bilddatensätze in mehrere 2D-Bilddatensätze zerlegt, und die Segmentierung für die 2D-Bilddatensätze wurde jeweils einzeln durchgeführt. Dies ist aber problematisch, da dabei die Zusammenhänge zwischen den einzelnen Schichten der 2D-Darstellung verloren gehen können. Der Übergang zwischen den einzelnen Schichten ist unbefriedigend, und oftmals sind die Segmentierungsergebnisse für jede einzelne Schicht nicht konsistent mit den Ergebnissen für die vorhergehende Schicht.

Des Weiteren wurde versucht, 3D-Bilddatensätze direkt zu segmentieren. Zu diesem Zweck wurde z.B. ein atlasbasiertes Verfahren verwendet, das ein vorsegmentiertes Volumen, den so genannten Atlas, verwendet. Dabei wird anhand eines Modells, das für die meisten Patienten eine Körperstruktur richtig wiedergibt, eine Segmentierung im Vorfeld bereits einmal durchgeführt, und man versucht durch Anpassung dieses Models an die tatsächlich vorliegenden Patientendaten eine Segmentierung durchzuführen. Dies ist aber ein sehr rechenzeitaufwändiger Vorgang.

In de Bruijne et al., Active shape models exploiting slice-to-slice correlation in segmentation of 3D AAA images, 2001, wird ein automatisiertes Verfahren für die Segmentierung von Thromben in abdominalen Aortenaneurysmen aus CTA-Daten vorgestellt. Drei Segmentierungsalgorithmen, die durch Active Shape Model-Segmentierung inspiriert wurden, wurden unter Verwendung der folgenden Ansätze untersucht: (1) Das ursprüngliche Active Shape Model-Schema wie von Cootes und Taylor vorgeschlagen, angewandt auf sequentielle Schnittbilder, wobei die Kontur, die in einem Schnittbild ermittelt wurde, als die Initialkontur im benachbarten Schnittbild verwendet wurde. (2) Ein ähnlicher Ansatz, wobei hauptsächlich Profilgrauwert-Korrelation mit benachbarten Schnittbildern anstelle einer Korrelation mit Profilen aus Trainingsdaten verwendet wurden, und (3) wie (2) mit zusätzlicher Annäherung an nahe liegende Kanten.

Gemäß Lötjönen et al., Reconstruction of 3-D Geometry Using 2-D Profiles and a Geometric Prior Model, IEEE Transaction on Medical Imaging, Vol. 18, No. 10, October 1999, pp. 992-1002, wurde ein Verfahren entwickelt, mit dem dreidimensionale (3-D) Flächen aus zweidimensionalen (2-D) Projektionsdaten rekonstruiert werden können. Das Verfahren wird verwendet, um individualisierte Boundary-Element-Modelle herzustellen, die aus Thorax- und Lungenflächen bestehen, um diese auf elektro- und magnetokardiographische inverse Probleme anzuwenden. Zwei orthogonale Projektionen werden verwendet. Ein geometrisches Anfangsmodell, das unter Verwendung segmentierter Magnetresonanztomographien erstellt wird, wird gemäß Profilen deformiert, die aus Projektionsbildern segmentiert wurden. Virtuelle Röntgenbilder des Anfangsmodells werden zuerst konstruiert, indem reale Röntgenbilder simuliert werden. Die 2-D-Profile des Modells werden aus der Projektion segmentiert und elastisch an die aus den Patientendaten segmentierten Profile angepasst. Die Verschiebungsvektoren, die durch die elastische 2-D-Anpassung produziert werden, werden auf die 3-D-Fläche des Anfangsmodells rückprojiziert. Schließlich wird das Modell deformiert, wobei rückprojizierte Vektoren verwendet werden.

### Beschreibung der Erfindung

Es ist die Aufgabe der vorliegenden Erfindung, ein verbessertes Verfahren zur Segmentierung eines 3D-Bilddatensatzes bereitzustellen.

Diese Aufgabe wird gelöst durch den Gegenstand der unabhängigen Ansprüche. Abhängige Ansprüche sind auf bevorzugte Ausführungsformen der Erfindung gerichtet.

Das erfindungsgemäße Segmentierungsverfahren kombiniert auf neuartige Weise an sich bereits bekannte Verfahrensschritte und löst dadurch das Problem der 3D-Segmentierung. Das erfindungsgemäße Verfahren bietet dabei insbesondere den Vorteil, die Komplexität der Information in dem 3D-Volumen zu reduzieren und ermöglicht auf diese Weise eine Geschwindigkeitssteigerung bei dem Segmentierungsverfahren. Die benötigte Rechenleistung bei dem Segmentierungsverfahren wird herabgesetzt, die Rechenzeit wird verkürzt. Gemäß einer bevorzugten Ausführungsform ist es möglich, ein vollautomatisches Segmentierungsverfahren durchzuführen. Dabei ist es möglich, die einzelnen Verfahrensschritte mit unterschiedlichen Anforderungen an die Genauigkeit auszuführen, es ist insbesondere möglich, zunächst eine grobe Segmentierung, und anschließend ein Feintuning der Segmentierung vorzunehmen.

Ein erfindungsgemäßes Verfahren zur Segmentierung eines 3D-Bilddatensatzes weist die folgenden Schritte auf:
a) Bereitstellen eines zu segmentierenden 3D-Bilddatensatzes einer Körperstruktur;
b) Erzeugen von synthetischen 2D-Bilddatensätzen durch Projecktion aus den unter a) bereitgestellten 3D-Bilddatensatz der Körperstruktur zur Anpassung eines insbesondere vorgegebenen generischen Modells der Körperstruktur;
c) Vor-Positionierung des generischen Models in Bezug auf den unter a) bereitgestellten 3D-Bilddatensatz der Körperstruktur;
d) Reduzierung des 3D-Bilddatensatzes auf eine Region um das vorpositionierte generische Modell, und Erzeugen von neuen 2D-Bilddatensätzen für den reduzierten 3D-Bilddatensatz;
e) Erzeugen eines 3D-Modelles der Körperstruktur, durch Anpassung des generischen Modells an die unter Punkt d) erzeugten synthetischen 2D-Bilddatensätze der Körperstruktur.

Das generische Modell der Körperstruktur ist insbesondere vorgegeben und wird beispielsweise in einer Datei bereitgestellt.

Bevorzugt handelt es sich bei dem 3D-Bilddatensatz um 3D-CT-Daten oder um 3D-MRT-Daten oder andere Formen von 3D-Bildgebungsdaten wie z.B. 3D-Fluoroskopiedaten. Bei der Körperstruktur kann es sich z.B. um einen Knochen, insbesondere um einen einzelnen Wirbel der Wirbelsäule oder um eine Bandscheibe handeln. Es kann sich aber auch um eine Weichteilstruktur wie z.B. bestimmte Bereiche des Gehirns oder um einen dort befindlichen Tumor handeln.

Der zu segmentierende 3D-Bilddatensatz einer Körperstruktur wird bereitgestellt. D.h. der 3D-Bilddatensatz kann mittels eines Aufnahmegeräts, wie z.B. eines Computertomographen oder eines Magnetresonanztomographen erst generiert werden, der zu segmentierende 3D-Bilddatensatz der Körperstruktur kann aber auch bereits in Form eines Datensatzes vorliegen.

Bei Schritt b) des Verfahrens werden synthetische 2D-Bilddatensätze basierend auf dem bereitgestellten 3D-Bilddatensatz der Körperstruktur erzeugt; das bedeutet, es werden keine echten 2D-Bilddatensätze mittels eines Aufnahmegerätes von der Körperstruktur erzeugt, sondern die 2D-Bilddatensätze werden aus den Daten des 3D-Bilddatensatzes der Körperstruktur künstlich erzeugt. Dazu kann z.B. eine bestimmte Form einer Aufnahme, die in einem 2D-Bilddatensatz resultiert, simuliert werden. Im Prinzip ist es dabei möglich, jedwede Abbildungsart, die in einem 2D-Bilddatensatz resultiert, zu simulieren. Es kann sich z.B. um eine perspektivische 2D-Abbildung (wie z.B. bei einer herkömmlichen fluoroskopischen Aufnahme) handeln. Bevorzugt handelt es sich aber um eine nicht-perspektivische 2D-Bildprojektion wie z.B. eine orthographische Projektion. Im Rahmen der simulierten orthographischen Projektion wird ein quaderförmiger Abbildungsstrahl verwendet bzw. simuliert. Diese Form der Abbildung ist besonders einfach, und sie ist deshalb mit sehr geringem Rechenaufwand simulierbar. Ein Algorithmus, um synthetische 2D-Bilddatensätze zu erzeugen, ist beschrieben in "FAST VOLUME RENDERING USING A SHEAR-WARP FACTORIZATION OF THE VIEWING TRANSFORMATION", Philippe G. Lacroute, Technical Report: CSL-TR-95-678, Computer Systems Laboratory, Departments of Electrical Engineering and Computer Science, Stanford University, September 1995.

Im Verfahrensschritt e) wird ein 3D-Modell der Körperstruktur basierend auf den erzeugten synthetischen 2D-Bilddatensätzen durch Anpassung des generischen Models der Körperstruktur erzeugt. Der Verfahrensschritt e) ist also gleichbedeutend mit der eigentlichen Segmentierung. Das erzeugte 3D-Modell erlaubt die gewünschte Zuordnung von Bereichen des 3D-Bilddatensatzes zu der Körperstruktur.

Das erfindungsgemäße Verfahren zur Segmentierung eines 3D-Bilddatensatzes weist den Verfahrensschritt c) auf: Vor-Positionierung des generischen Models in Bezug auf den unter a) bereitgestellten 3D-Bilddatensatz der Körperstruktur. Dabei handelt es sich bevorzugt um eine Grobanalyse der erzeugten synthetischen 2D-Bilddatensätze, um Informationen über eine initiale Platzierung des generischen Modells in Bezug auf die synthetischen 2D-Bilddatensätze zu bestimmen. Beispielsweise wird für einen 3D-Datensatz der Hüft-Femur-Region anhand der synthetischen 2D-Bilddatensätze das Zentrum des Femurkopfes, die Schenkelachse und die Halsachse bestimmt, wodurch man sowohl eine grobe Position des Femurknochens als auch seiner Ausdehnung in den 2D- und 3D-Datensätzen erhält. Für andere Körperstrukturen würde man sich ähnliche Parameter überlegen, die es erlauben, auf einfache Weise eine grobe Position des generischen Models zu berechnen. Gemäß einer bevorzugten Ausführungsform erfolgt das Analysieren in Form einer Vor-Registrierung, bei der die Bestimmung von morphologischen Parametern der Körperstruktur automatisch durchgeführt wird. Die automatische Bestimmung von morphologischen Parametern ist z.B. beschrieben in "Automatic Extraction of Femur Contours from Calibrated X-Ray Images using Statistical Information" (Xiao Dong, Miguel A. Gonzalez Ballester, Guoyan Zheng), Journal of Multimedia, Vol. 2, No. 5, September 2007, Kapitel "IV. AUTOMATED INITIALIZATION OF THE STATISTICAL MODEL". Gemäß einer weiteren bevorzugten Ausführungsform ersetzt man die automatische Vor-Registrierung basierend auf automatischem Bestimmen von morphologischen Parametern durch eine Vor-Registrierung bestehend aus mindestens einen manuellen Verfahrensschritt. Bei diesem mindestens einen manuellen Verfahrensschritt handelt es sich bevorzugt um das manuelle Identifizieren von Landmarken in dem 3D-Bilddatensatz, d.h. um das manuelle Identifizieren von besonders auffälligen und charakteristischen Punkten in dem 3D-Bilddatensatz, oder auch die manuelle Positionierung des generischen Models anhand der synthetischen 2D-Bilddatensätze oder des 3D-Bilddatensatzes.

Nach der Vor-Registrierung im Punkt c) erfolgt eine Reduzierung des 3D-Bilddatensatzes anhand des generischen Models und ein Erzeugen von neuen 2D-Bilddatensätzen für den reduzierten 3D-Bilddatensatz. Beispielsweise wird um das generische Model eine Hülle ("Bounding Box") gelegt, die verwendet wird, um aus dem Original-3D-Bilddatensatz einen kleineren 3D-Bilddatensatz herauszuschneiden, der hauptsächlich die zu segmentierende Struktur umfasst. Dieser kleinere 3D-Bilddatensatz wird verwendet, um neue synthetische 2D-Bilddatensätze zu erzeugen, die im Weiteren für die Anpassung des generischen Models verwendet werden. Dadurch wird sowohl die Rechenzeit des Verfahrens zur Segmentierung eines 3D-Bilddatensatzes verkürzt als auch die Möglichkeit geschaffen, synthetische 2D-Bilddatensätze zu erzeugen, die in der Realität nicht sinnvoll ausgewertet werden können. Beispielsweise ist bei einer Röntgenaufnahme der Hüfte, wenn die Aufnahme durch den Femurkopf und entlang der Links-Rechts-Richtung des Patienten erfolgt, eine Analyse des Femurs nicht möglich. In der beschriebenen Aufnahme ist sowohl der linke als auch der rechte Femurkopf zu sehen, die sich beide überlagern. In der synthetischen Aufnahme würde man beispielsweise den gewünschten Femur anhand der Positionierung des generischen Models aus dem Original-3D-Bilddatensatz herausschneiden, wodurch eine synthetische Version der vorher beschriebenen Aufnahme möglich ist, bei der keine störenden Überlagerungen auftreten. Dadurch hat man die Möglichkeit, für die jeweilige Körperstruktur optimale synthetische 2D-Bilddaten zu generieren, die durch die Einschränkung auf den reduzierten 3D-Bilddatensatz auch weniger störende Artefakte enthalten.

Auf welche Weise der Verfahrensschritt e) des Verfahrens zur Segmentierung eines 3D-Bilddatensatzes realisiert werden kann, ist im Stand der Technik im Prinzip in einem anderen Zusammenhang bekannt bzw. wurde von der Anmelderin bereits früher entwickelt und zum Patent angemeldet. Insbesondere ist es möglich, zum Erzeugen eines 3D-Modelles der Körperstruktur basierend auf den erzeugten synthetischen 2D-Bilddatensätzen der Körperstruktur an sich bekannte Verfahren von 2D-3D-Rekonstruktionsprozessen zu verwenden. So offenbart z.B. die europäische Patentanmeldung der Anmelderin EP 06 012 256 (Anmeldenunimer) ein entsprechendes 2D-3D-Rekonstruktionsverfahren. Dabei wird ein generisches Modell der Körperstruktur bereitgestellt und mindestens ein 2D-Bild des generischen Modells der Körperstruktur wird erzeugt. Bei dem generischen Modell handelt es sich um ein Modell, das z.B. aus einem statistischen Modell durch eine prinzipielle Analyse von verschiedenen Komponenten erzeugt worden sein kann. Das generische Modell der Körperstruktur wird dann auf einen 2D-Bilddatensatz abgebildet. Dabei handelt es sich bevorzugt um eine synthetische Abbildung, d.h. das Projektionsbild des generischen Modells wird auf rein rechnerische Art und Weise erzeugt. Gemäß einer bevorzugten Ausführungsform umfasst Schritt e) des erfindungsgemäßen Segmentierungsverfahrens ein Anpassen des zu erzeugenden 3D-Modelles aufgrund von Bildähnlichkeit zwischen den in Schritt b) oder d) erzeugten synthetischen 2D-Bilddatensätzen einerseits und dem mindestens einen 2D-Bild des generischen Modells der Körperstruktur andererseits. Auf welche Weise diese Anpassung aufgrund der Bildähnlichkeit vorzunehmen ist, ist im Stand der Technik hinlänglich bekannt. Es wird dabei bevorzugt auf besonders markante Punkte der miteinander zu vergleichenden 2D-Bilddatensätze, ihre Eigenschaften und Orientierung zurückgegriffen. Dabei wird das zu erzeugende 3D-Modell bevorzugt so lange angepasst, bis (bei bereits korrekter Orientierung im Raum) seine Form oder Umrandung in entsprechender 2D-Darstellung mit dem mindestens einen 2D-Bild des generischen Modells der Körperstruktur ausreichend gut übereinstimmt. Bevorzugt handelt es sich bei dem dreidimensionalen Modell um ein so genanntes "Point Distribution Model" (PDM). Nähere Einzelheiten dazu sind den folgenden Publikationen zu entnehmen: "Building a Complete Surface Model from Sparse Data Using Statistical Shape Models: Application to Computer Assisted Knee Surgery System" (Markus Fleute, Stephane Lavallee), Lecture Notes In Computer Science, Vol. 1496; Proceedings of the First International Conference on Medical Image Computing and Computer-Assisted Intervention, 1998; Springer-Verlag, London, UKISBN:3-540-65136-5; Seiten 879-887; sowie "Automatic Extraction of Femur Contours from Calibrated X-Ray Images using Statistical Information" (Xiao Dong, Miguel A. Gonzalez Ballester, Guoyan Zheng), Journal of Multimedia, Vol. 2, No. 5, September 2007, Kapitel "III. CALIBRATED X-RAY IMAGES AND THE STATISTICAL MODEL", Absatz "B. Statistical model of the proximal femur".

Gemäß einer bevorzugten Ausführungsform handelt es sich bei dem generischen Modell der Körperstruktur um ein rein geometrisches generisches Modell. Bei einem geometrischen Modell wird die innere Struktur des Modells vernachlässigt. So kann z.B. der gesamte innere Aufbau der Körperstruktur bei einem geometrischen generischen Modell vollständig vernachlässigt werden. Es handelt sich insofern um ein sehr einfaches generisches Modell. Die Verwendung eines solchen geometrischen generischen Modells ist dann sinnvoll, wenn nur Oberflächenstrukturen einer Körperstruktur für die Segmentierung von Interesse sind. Dies ist z.B. dann der Fall, wenn eine scharfe Abgrenzung zwischen einem Wirbelkörper und der eingefügten Bandscheibe getroffen werden soll; die innere Struktur des Wirbels selbst ist hingegen in dieser Hinsicht von untergeordnetem Interesse.

Das Ergebnis des Verfahrenschritts e) ist die Segmentierung der gewünschten Körperstruktur anhand des generischen Modells unter Verwendung der synthetischen 2D-Bildatensätze. Das generische Model kann auf Grund seines statistischen Wissens einen großen Teil der Variationen einer Körperstruktur rekonstruieren. Man kann aber davon ausgehen, dass bestimmte Bereiche nicht unbedingt optimal rekonstruiert wurden, beispielsweise wenn die Bereiche in den synthetischen 2D-Bilddaten nicht eindeutig zu identifizieren sind oder die Form der Körperstruktur nicht Teil des statistischen Wissens des generischen Models ist. Um die Genauigkeit des Verfahrens zu erhöhen, wird gemäß einer bevorzugten Ausführungsform der Erfindung ausgehend vom Ergebnis des Verfahrensschritts e) eine abschließende Nachkorrektur des Ergebnisses anhand der 3D-Bilddaten durchgeführt. Durch die vorhergehenden Verfahrensschritte hat man ein 3D-Model, das in den 3D-Bilddaten genau positioniert ist, und an dem nur noch lokale Anpassungen erfolgen müssen. Gegenüber einem modellbasierten Segmentierverfahren, das nur auf den 3D-Bilddaten beruht, ergibt sich der Vorteil eines eingeschränkten Suchraums und dadurch eine erhebliche Zeitersparnis und größere Sicherheit, ein genaues Segmentierergebnis zu erreichen.

Gemäß einem weiteren Aspekt der Erfindung ist diese auf ein Computerprogrammprodukt mit einem Programmcode zum Ausführen des erfindungsgemäßen Segmentierungsverfahrens gerichtet. Bei diesem Computerprogrammprodukt handelt es sich z.B. um eine CD-ROM oder um eine DVD. Der Programmcode kann dabei in sämtlichen Programmiersprachen abgefasst sein.

Gemäß einem weiteren Aspekt bezieht sich die Erfindung auf ein System zum Segmentieren eines 3D-Bilddatensatzes. Dieses weist zunächst eine Aufnahmeeinheit auf, die angepasst ist, um einen zu segmentierenden 3D-Bilddatensatz einer Körperstruktur bereitzustellen. Bei dieser Aufnahmeeinheit handelt es sich um ein bildgebendes Gerät wie z.B. um einen 3D-C-Bogen, einen Computertomographen oder um einen Magnetresonanztomographen.

Das erfindungsgemäße System umfasst des Weiteren eine Recheneinheit wie z.B. einen Computer, die angepasst ist, um den durch die Aufnahme bereitgestellten zu segmentierenden 3D-Bilddatensatz datenverarbeitungstechnisch zu erfassen. Die Recheneinheit kann in die Aufnahmeeinheit integriert sein, oder sie kann von dieser getrennt vorgesehen sein. In diesem Fall ist es möglich, dass ein Datenträger wie z.B. eine CD-ROM oder ein Memorystick zum Auslesen in die Recheneinheit eingegeben wird. Des Weiteren ist die Recheneinheit angepasst, um synthetische 2D-Bilddatensätze aus dem durch die Recheneinheit bereits erfassten 3D-Bilddatensatz der Körperstruktur durch Projektion zu erzeugen. Bei diesen synthetischen 2D-Bilddatensätzen handelt es sich um künstlich erzeugte 2D-Bilddatensätze, bevorzugt werden dabei sehr einfache Projektionen wie z.B. eine orthographische Projektion verwendet. Des Weiteren ist die Recheneinheit angepasst; um ein 3D-Modell der Körperstruktur basierend auf den durch die Recheneinheit erzeugten synthetischen 2D-Bilddatensätzen der Körperstruktur zu erzeugen. Für alle Prozesse, die in der Recheneinheit ablaufen, gilt sinngemäß das in der Beschreibung hinsichtlich des Verfahrens zur Segmentierung des 3D-Bilddatensatzes Ausgesagte.

Des Weiteren weist das erfindungsgemäße System zum Segmentieren eines 3D-Bilddatensatzes eine Ausgabeeinheit auf, um das erzeugte 3D-Modell der Körperstruktur auszugeben. Dabei kann es sich z.B. um eine Anzeigeeinheit wie z.B. einen Bildschirm handeln. Die Ausgabeeinheit kann aber auch lediglich eingerichtet sein, um eine Datei zu erzeugen. Diese Datei kann später bei Bedarf ausgelesen oder auf einem anderen Ausgabegerät angezeigt werden.

Insgesamt ist das erfindungsgemäße System zum Segmentieren eines 3D-Bilddatensatzes dazu geeignet und auch speziell dafür angepasst, das erfindungsgemäße Verfahren zur Segmentierung eines 3D-Bilddatensatzes wie oben beschrieben auszuführen. Sämtliche bevorzugten Ausführungsformen des erfindungsgemäßen Segmentierungsverfahrens können mithilfe des Systems zum Segmentieren eines 3D-Bilddatensatzes realisiert werden.

Die Erfindung wird noch besser verstanden werden anhand der beiliegenden Zeichnung.

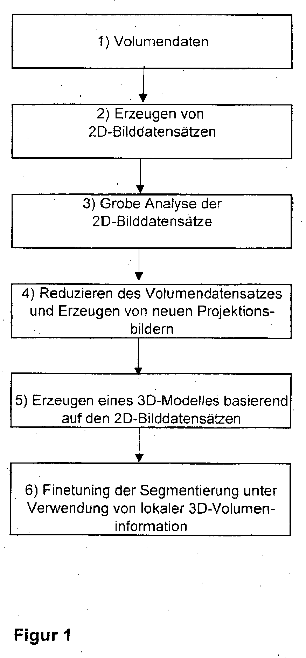

Figur 1: Flussdiagramm eines erfindungsgemäßen Segmentierungsverfahrens.

Das Flussdiagramm, das in Figur 1 dargestellt ist, bietet einen guten Überblick über ein erfindungsgemäßes Segmentierungsverfahren. Dabei bilden die Verfahrensschritte 1,2, 3, 4 und 5, die in Figur 1 dargestellt sind, die wesentlichen Verfahrensschritte des Segmentierungsverfahrens, die den Verfahrensschritten a), b), c), d) und e) gemäß Anspruch 1 entsprechen.

In einem ersten Verfahrensschritt werden Volumendaten bereitgestellt. Bei diesen Volumendaten handelt es sich z.B. um 3D-Bilddaten, die mittels eines Computertomographen oder eines Magnetresonanztomographen gewonnen worden sind. Diese Daten sollen segmentiert werden, d.h. mindestens ein Bereich des Volumendatensatzes soll mindestens einer Körperstruktur zugeordnet werden. Zu diesem Zweck werden in Schritt 2 der beispielhaft in Figur 1 dargestellten Ausführungsform der Erfindung 2D-Bilddatensätze erzeugt. Dabei kann es sich um sämtliche Arten von synthetischen 2D-Bilddatensätzen handeln. Es ist möglich, z.B. eine Aufnahme mittels eines 2D-C-Bogens zu simulieren. In der Praxis wird aber eine einfachere Form der 2D-Aufnahme bevorzugt werden, die datenverarbeitungstechnisch leichter zu simulieren ist. Dies ist z.B. bei der bereits angesprochenen orthographischen Projektion, die einen quaderförmigen Abbildungsstrahl verwendet, der Fall.

Gemäß der bevorzugten Ausführungsform des erfindungsgemäßen Verfahrens, das in Figur 1 dargestellt ist, wird in einem dritten Verfahrensschritt eine Vor-Positionierung des generischen Modells in Bezug auf den bei Schritt 1 bereitgestellten 3D-Bilddatensatz der Körperstruktur vorgenommen. Im beschriebenen Ausführungsbeispiel handelt es sich dabei um eine Grobanalyse der erzeugten synthetischen 2D-Bilddatensätze, um Informationen über eine initiale Platzierung des generischen Modells in Bezug auf die synthetischen 2D-Bilddatensätze zu bestimmen.

In einem nachfolgenden Verfahrensschritt 4 erfolgt eine Reduzierung des 3D-Bilddatensatzes anhand des generischen Modells und eine Erzeugung von neuen 2D-Bilddatensätzen für den reduzierten 3D-Bilddatensatz. Im beschriebenen Ausführungsbeispiel wird dazu um das generische Modell eine Hülle ("Bounding Box") gelegt, die verwendet wird, um aus dem Original-3D-Bilddatensatz einen kleineren 3D-Bilddatensatz herauszuschneiden, der im Wesentlichen die zu segmentierende Struktur umfasst. Dieser kleinere 3D-Bilddatensatz wird verwendet, um neue synthetische 2D-Bilddatensätze zu erzeugen, die im Weiteren für die Anpassung des generischen Modells verwendet werden. Dies ermöglicht eine Verkürzung der Rechenzeit des Verfahrens zur Segmentierung eines 3D-Bilddatensatzes und schafft überdies die Möglichkeit, synthetische 2D-Bilddatensätze zu erzeugen, die in der Realität sonst nicht erzeugt werden könnten.

Bei Verfahrensschritt 5 wird ein 3D-Modell basierend auf den 2D-Bilddatensätzen erzeugt. Bei diesem Verfahrensschritt handelt es sich um den eigentlichen Segmentierungsschritt, d.h. eine Zuordnung von Bereichen des Bilddatensatzes zu einer bestimmten Körperstruktur wird ermöglicht und durchgeführt.

Bei Verfahrensschritt 6 handelt es sich um einen optionalen Verfahrensschritt, der gemäß der bevorzugten Ausführungsform, die in Figur 1 dargestellt ist, Verwendung findet. Es handelt sich bei Verfahrensschritt 6 um ein Feintuning, das durchgeführt wird, um die ermittelte Segmentierung unter Verwendung von lokaler 3D-Volumeninformation zu verbessern.

Im Folgenden wird ein Überblick über ein modellbasiertes Segmentierungsverfahren gegeben. Modellbasiert bedeutet in diesem Zusammenhang, dass bei der Erzeugung des 3D-Modelles der Körperstruktur basierend auf den erzeugten synthetischen 2D-Bilddatensätzen der Körperstruktur auf ein generisches Modell, das im Vorfeld erzeugt worden ist, bzw. auf ein Projektionsbild des generischen Modells, zurückgegriffen wird.

Den ersten Ausgangspunkt für ein beispielhaftes in Segmentierungsverfahren bildet der Volumendatensatz eines Patienten. Dabei kann es sich z.B. um 3D-CT-Daten oder um 3D-MRT-Daten handeln. Mittels eines geeigneten Aufnahmeverfahrens wurde eine bestimmte Körperstruktur des Patienten wie z.B. die Wirbelsäule umfassend verschiedene Einzelwirbel dreidimensional abgebildet. Der Volumendatensatz wird nun erfindungsgemäß zerlegt, d.h. es werden verschiedene Projektionsbilder aus diesem Volumendatensatz gewonnen, die eine bestimmte Körperstruktur abbilden. Beispielsweise handelt es sich dabei um einen bestimmten Wirbelkörper. Zur Erzeugung der 2D-Darstellungen der Körperstruktur, im vorliegenden Fall des Wirbels, können im Prinzip sämtliche Arten von Projektionen verwendet werden, bevorzugt kommen aber rechentechnisch einfache Verfahren zum Einsatz wie z.B. die orthographische Projektion, bei der ein quaderförmiger Abbildungsstrahl verwendet wird.

Den zweiten Ausgangspunkt für das erfindungsgemäße Verfahren zur Segmentierung eines 3D-Bilddatensatzes bildet ein generisches Modell der abzubildenden Körperstruktur, hier eines Wirbelkörpers. Bei diesem generischem Modell wird berücksichtigt, wie ein bestimmter Wirbelkörper in statistischem Schnitt, d.h. gemittelt über eine Vielzahl von Personen, ausgebildet ist. Je nach Position des Wirbels in der Wirbelsäule weist ein Wirbelkörper unterschiedlich ausgeprägte Merkmale auf. Aufgrund einer prinzipiellen Komponentenanalyse wird ein generisches Modell erzeugt. Von diesem generischen Modell wird mindestens ein Projektionsbild des generischen Modells errechnet. Dabei werden die Abbildungsart und die Abbildungsbedingungen definiert, und auf künstliche Art und Weise wird durch einen Rechenprozess ein Projektionsbild des generischen Modells erzeugt.

Nachdem die Projektionsbilder der Patientendaten und das mindestens eine Projektionsbild des generischen Modells erhalten worden sind, wird eine Modellanpassung basierend auf Bildähnlichkeiten zwischen den 2D-Bildern vorgenommen. Dabei werden besonders ausgezeichnete Punkte in den 2D-Bildern erkannt, und deren Orientierung im Bild wird ermittelt. Das 3D-Modell des Wirbels, das basierend auf den erzeugten synthetischen 2D-Bilddatensätzen des Wirbels gewonnen wird, wird dabei solange angepasst, bis eine hinreichend genaue Übereinstimmung zwischen den 2D-Projektionsbildern der Patientendaten und dem Projektionsbild des generischen Modells erreicht worden ist. Ist dies der Fall, so wird hieraus die gesuchte Segmentierungsinformation für die 3D-Daten gewonnen, und es ist klar, welche Bereiche des 3D-Bilddatensatzes den Wirbel, und welche die Umgebung des Wirbels wiedergeben.

Das erfindungsgemäße Verfahren zur Segmentierung eines 3D-Bilddatensatzes erlaubt es, eine Segmentierung mit großer Genauigkeit innerhalb kurzer Rechenzeit durchzuführen. Die Rechenzeit kann insbesondere dadurch gesenkt werden, dass die verwendeten Projektionsbilder (2D-Bilddatensätze) auf frei wählbare Art und Weise erzeugt werden können. Hierzu ist es insbesondere nicht notwendig, bereits über Vorkenntnisse hinsichtlich der Segmentierung zu verfügen. Es kann bei dem erfindungsgemäßen Segmentierungsverfahren außerdem darauf verzichtet werden, Kenntnisse über ein verwendetes Aufnahmegerät in die Simulation einfließen zu lassen. Insbesondere das vielfach beschriebene orthographische Projektionsverfahren, das einen quaderförmigen Abbildungsstrahl verwendet, ist praktisch frei von gerätespezifischen Aufnahmeparametern.

## Patentansprüche

1. Verfahren zur Segmentierung eines 3D-Bilddatensatzes, das die folgenden Schritte aufweist:
a) Bereitstellen eines zu segmentierenden 3D-Bilddatensatzes einer Körperstruktur und eines generischen Modells der Körperstruktur;
b) Erzeugen von synthetischen 2D-Bilddatensätzen aus dem unter a) bereitgestellten 3D-Bilddatensatz der Körperstruktur durch Projektion; und
c) Vor-Positionierung des generischen Modells in Bezug auf den unter a) bereitgestellten 3D-Bilddatensatz der Körperstruktur; und
d) Reduzieren des 3D-Bilddatensatzes anhand des generischen Modells durch Ausschneiden eines Teils des 3D-Bilddatensatzes der Körperstruktur, wobei der Teil hauptsächlich die zu segmentierende Körperstruktur umfasst, und Erzeugen von neuen 2D-Bilddatensätzen für den reduzierten 3D-Bilddatensatz; und
e) Erzeugen eines 3D-Modells der Körperstruktur durch Anpassung des generischen Modells an die in Schritt d) erzeugten synthetischen 2D-Bilddatensätze der Körperstruktur.

2. Verfahren gemäß Anspruch 1, wobei zum Erzeugen der synthetischen 2D-Bilddatensätze gemäß Schritt b) eine orthographische Projektion verwendet wird.

3. Verfahren gemäß einem der vorangehenden Ansprüche, wobei Schritt c) eine Vor-Registrierung in Form einer automatischen Bestimmung von morphologischen Parametern der Körperstruktur umfasst.

4. Verfahren gemäß einem der Ansprüche 1 bis 2, wobei Schritt c) eine Vor-Registrierung durch mindestens einen manuellen Verfahrensschritt, bevorzugt das manuelle Identifizieren von Landmarken in dem 3D-Bilddatensatz, umfasst.

5. Verfahren gemäß einem der vorangehenden Ansprüche, wobei eine Projektionsrichtung der 2D-Bilddatensätze automatisch identifiziert wird.

6. Verfahren gemäß Anspruch 5, wobei Schritt e) ein Anpassen des zu erzeugenden 3D-Modelles aufgrund von Bildähnlichkeit zwischen den in Schritt b) oder d) erzeugten synthetischen 2D-Bilddatensätzen und dem mindestens einen 2D-Bild des generischen Modells der Körperstruktur umfasst.

7. Verfahren gemäß einem der Ansprüche 5 bis 6, wobei das generische Modell der Körperstruktur ein rein geometrisches generisches Modell der Körperstruktur ist.

8. Verfahren gemäß Anspruch 7, das des Weiteren den folgenden Schritt nach dem Schritt e) aufweist:
f) Feintuning des erzeugten 3D-Modelles.

9. Computerprogrammprodukt mit einem Programmcode zum Ausführen des Verfahrens gemäß einem der Ansprüche 1 bis 8.

10. System zum Segmentieren eines 3D-Bilddatensatzes, das Folgendes aufweist:
• eine Aufnahmeeinheit, die angepasst ist, um einen zu segmentierenden 3D-Bilddatensatz einer Körperstruktur bereitzustellen; und
• eine Recheneinheit,
a) die angepasst ist, um den durch die Aufnahmeeinheit bereitgestellten zu segmentierenden 3D-Bildddatensatz datenverarbeitungstechnisch zu erfassen,
b) die angepasst ist, um synthetische 2D-Bilddatensätze aus dem erfassten 3D-Bilddatensatz der Körperstruktur durch Projektion zu erzeugen,
c) die angepasst ist, um eine Vor-Positionierung des generischen Modells in Bezug auf den in a) bereitgestellten 3D-Bilddatensatz der Körperstruktur vorzunehmen, und
d) die angepasst ist, den 3D-Bilddatensatz anhand des generischen Modells durch Ausschneiden eines Teils des 3D-Bilddatensatzes der Körperstruktur zu reduzieren, wobei der Teil hauptsächlich die zu segmentierende Körperstruktur umfasst, und neue 2D-Bilddatensätze für den reduzierten 3D-Bilddatensatz zu erzeugen, und
e) die angepasst ist, um ein 3D-Modell der Körperstruktur durch Anpassung eines bereitgestellten generischen Modells an die in d) erzeugten synthetischen 2D-Bilddatensätze der Körperstruktur zu erzeugen;
• eine Ausgabeeinheit, um das erzeugte 3D-Modell der Körperstruktur auszugeben.

## Claims

1. Method for segmenting a 3D image data record that presents the following steps:
a) Providing a 3D image data record to be segmented of a body structure and a generic model of the body structure;
b) Producing synthetic 2D image data records from the 3D image data records provided under a) of the body structure by projection; and
c) Pre-positioning of the generic model in relation to the 3D image data record of the body structure provided under a); and
d) Reducing the 3D image data record by means of the generic model by cutting out a part of the 3D image data record of the body structure, in which the part mainly comprises the body structure to be segmented, and producing new 2D image data records for the reduced 3D image data record; and
e) producing a 3D-model of the body structure by adapting the generic model to the synthetic 2D image data records of the body structure generated in step d).

2. Method according to claim 1, in which for producing the synthetic 2D image data records according to step b) an orthographic projection is used.

3. Method according to one of the previous claims, in which step c) includes a pre-registration in the form of an automatic determination of morphologic parameters of the body structure.

4. Method according to one of the claims 1 to 2, in which step c) includes a pre-registration by at least one manual process step, preferably the manual identification of landmarks in the 3D image data record.

5. Method according to one of the previous claims, wherein a projection direction of the 2D image data records is automatically identified.

6. Method according to claim 5, in which step e) includes an adaptation of the 3D model to be generated based on similarity of image between the synthetic 2D image data records generated in step b) or d) and the at least one 2D image of the generic model of the body structure.

7. Method according to one of the claims 5 to 6, in which the generic model of the body structure is a purely geometric generic model of the body structure.

8. Method according to claim 7, which moreover presents the following step after step e):
f) fine tuning of the generated 3D model.

9. Computer program product with a program code for the execution of the method according to one of claims 1 to 8.

10. System for segmenting a 3D image data record, which presents the following:
• a registration unit that is adapted to provide a 3D image data record to be segmented of a body structure; and
• a computing unit,
a) that is adapted to detect, by data handling, the 3D image data record to be segmented provided by the registration unit,
b) that is adapted to generate synthetic 2D image data records from the detected 3D image data record of the body structure by projection,
c) that is adapted to carry out a pre-positioning of the generic model in relation to the 3D image data record of the body structure provided in a), and
d) that is adapted to reduce the 3D image data record based on the generic model by cutting out a part of the 3D image data record of the body structure, the part mainly including the body structure to be segmented, and to generate new 2D image data records for the reduced 3D image data record, and
e) that is adapted to generate a 3D-model of the body structure by adjustment of a provided generic model to the synthetic 2D image data records of the body structure generated in d);
• a output unit in order to output the generated 3D model of the body structure.

## Revendications

1. Méthode pour la segmentation d'un ensemble de données d'images 3D qui présente les phases suivantes:
a) Fournir un ensemble de données d'images 3D à segmenter d'une structure d'un corps et un modèle générique de la structure du corps;
b) Produire des ensembles de données d'images 2D synthétiques à partir des ensembles de données d'images 3D fournis dans a) de la structure du corps par projection; et
c) Pré-positionner le modèle générique par rapport à l'ensemble de données d'images 3D de la structure du corps fourni dans a); et
d) Réduire l'ensemble de données d'images 3D au moyen du modèle générique en découpant une partie de l'ensemble de données d'images 3D de la structure du corps, où la partie principalement comprend la structure du corps à segmenter, et produire de nouveaux ensembles de données d'images 2D pour l'ensemble de données d'images 3D réduit; et
e) Produire un modèle 3D de la structure du corps par adaptation du modèle générique aux ensembles de données d'images 2D synthétiques de la structure du corps générés dans la phase d).

2. Méthode selon la revendication 1, où pour la production des ensembles de données d'images 2D synthétiques conformément à la phase b) une projection orthographique est employée.

3. Méthode selon l'une des revendications précédentes, où la phase c) comprend un pré-enregistrement dans la forme d'une détermination automatique de paramètres morphologiques de la structure du corps.

4. Méthode selon l'une des revendications 1 à 2, où la phase c) comprend un pré-enregistrement par au moins une phase de procédé manuelle, de préférence l'identification manuelle de points de repère dans l'ensemble de données d'images 3D.

5. Méthode selon l'une des revendications précédentes, où une direction de projection des ensembles de données d'images 2D est identifiée automatiquement.

6. Méthode selon la revendication 5, où la phase e) comprend une adaptation du modèle 3D à générer en fonction de la similarité d'image entre les ensembles de données d'images 2D synthétiques générés en phase b) ou d) et l'au moins une image 2D du modèle générique de la structure du corps.

7. Méthode selon l'une des revendications 5 à 6, où le modèle générique de la structure du corps est un modèle générique purement géométrique de la structure du corps.

8. Méthode selon la revendication 7, qui présente en outre la phase suivante après la phase e): f) réglage fin du modèle 3D généré.

9. Produit de programme informatique avec un code de programme pour l'exécution de la méthode selon une des revendications 1 jusqu'à 8.

10. Système pour la segmentation d'un ensemble de données d'images 3D, comprenant:
• une unité d'enregistrement adaptée pour fournir un ensemble de données d'images 3D à segmenter d'une structure d'un corps; et
• une unité de calcul
a) qui est adaptée pour relever, par traitement des données, l'ensemble de données d'images 3D à segmenter fourni par l'unité d'enregistrement,
b) qui est adaptée pour générer des ensembles de données d'images 2D synthétiques à partir de l'ensemble de données d'images 3D relevé de la structure du corps par projection,
c) qui est adaptée pour exécuter un pré-positionnement du modèle générique par rapport à l'ensemble de données d'images 3D de la structure du corps fourni dans a), et
d) qui est adaptée pour réduire l'ensemble de données d'images 3D en fonction du modèle générique en découpant une partie de l'ensemble de données d'images 3D de la structure du corps, la partie principalement comprenant la structure du corps à segmenter, et pour générer de nouveaux ensembles de données d'images 2D pour l'ensemble de données d'images 3D réduit, et
e) qui est adaptée pour générer un modèle 3D de la structure du corps par adaptation d'un modèle générique fourni aux ensembles de données d'images 2D synthétiques de la structure du corps générés dans d);
• une unité de sortie pour émettre le modèle 3D généré de la structure du corps.
